# EUROPEAN PATENT SPECIFICATION

(11) **EP 3 541 143 B1**
(45) Date of publication and mention of the grant of the patent: **29.11.2023**
(21) Application number: 19172219.8
(22) Date of filing: 22.03.2012
(51) Int. Cl.: H04W 76/38, H04W 76/10, H04W 4/70

(54) **METHOD FOR USER EQUIPMENT TRANSMITTING/RECEIVING DATA IN WIRELESS COMMUNICATION SYSTEM AND APPARATUS FOR SAME**
VERFAHREN FÜR EIN BENUTZERGERÄT ZUM SENDEN UND EMPFANGEN VON DATEN IN EINEM DRAHTLOSKOMMUNIKATIONSSYSTEM UND VORRICHTUNG DAFÜR
PROCÉDÉ DE TRANSMISSION/RÉCEPTION DE DONNÉES D'UN ÉQUIPEMENT UTILISATEUR DANS UN SYSTÈME DE COMMUNICATION SANS FIL ET APPAREIL CORRESPONDANT

(30) Priority: 29.03.2011 US 201161469074 P
(43) Date of publication of application: 18.09.2019
(62) Divisional of application: 12765574.4
(73) Proprietor: LG Electronics Inc., Seoul 150-721 (KR)
(72) Inventor: LEE, Youngdae, Anyang-si, Gyeonggi-do 431-080 (KR); JUNG, Sunghoon, Anyang-si, Gyeonggi-do 431-080 (KR); YI, Seungjune, Anyang-si, Gyeonggi-do 431-080 (KR); CHUN, Sungduck, Anyang-si, Gyeonggi-do 431-080 (KR); PARK, Sungjun, Anyang-si, Gyeonggi-do 431-080 (KR)
(74) Representative: Frenkel, Matthias Alexander

(56) References cited:
- ETRI: "MTC device/low priority/roaming indications at RRC connection setup", 3GPP DRAFT; R2-106188 MTC DEVICE-LOW PRIORITY-ROAMING INDICATIONS AT RRC CONNECTION SETUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492167,
- LG ELECTRONICS INC: "RRC Connection Release for MTC Devices", 3GPP DRAFT; R2-104562 MTC RRC CONN RELEASE_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 16 August 2010 (2010-08-16), XP050451732, [retrieved on 2010-08-16]
- KPN: "Proposed Service Requirements for the category Low Data Usage", 3GPP DRAFT; S1-090020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Antonio, Texas, USA; 20090126, 26 January 2009 (2009-01-26), XP050330438, [retrieved on 2009-01-26]
- "RRC connection control messages", 3GPP DRAFT; R2-075561_RRC_CONNECTION_CONTROL_MESSAGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Vienna, Austria; 20071209, 9 December 2007 (2007-12-09), XP050142101, [retrieved on 2007-12-09]

## Description

### Field of the Invention

The present invention relates to a wireless communication system and, more particularly, to a method for a user equipment transmitting/receiving data in a wireless communication system and an apparatus for the same.

### Background Art

As an example of a communication system to which the present invention may be applied, a 3GPP LTE (3^{rd} Generation Partnership Project Long Term Evolution; hereinafter referred to as "LTE") communication system will now be broadly described.

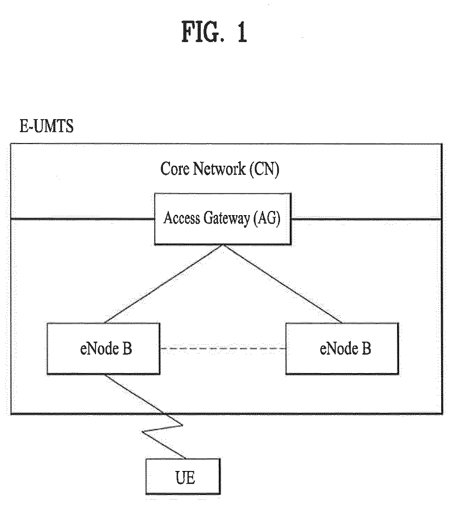

Fig. 1 illustrates a general view of an E-UMTS network structure as an example of a communication system. Herein, the E-UMTS (Evolved Universal Mobile Telecommunications System) corresponds to a system evolved from the conventional UMTS (Universal Mobile Telecommunications System). The 3GPP is presently carrying out a basic standardization process for the E-UMTS. Generally, the E-UMTS may also be referred to as an LTE system. For details of the technical specifications of the UMTS and the E-UMTS, reference may be made to Release 7 and Release 8 of "3rd Generation Partnership Project; Technical Specification Group Radio Access Network".

Referring to Fig. 1, the E-UMTS includes a User Equipment (UE), base stations (eNode B; eNB), and an Access Gateway (AG), which is located at an end of a network (E-UTRAN) and connected to an external network. The base stations can simultaneously transmit multiple data streams for a broadcast service, a multicast service and/or a unicast service.

One or more cells may exist for one base station. One cell is set to one of bandwidths of 1.25, 2.5, 5, 10, 15, and 20Mhz to provide a downlink or uplink transport service to several user equipments. Different cells may be set to provide different bandwidths. Also, one base station controls data transmission and reception for a plurality of user equipments. The base station transmits Downlink (DL) scheduling information of downlink data to the corresponding user equipment to notify information related to time and frequency domains to which data will be transmitted, encoding, data size, and HARQ (Hybrid Automatic Repeat and reQuest). Also, the base station transmits Uplink (UL) scheduling information of uplink data to the corresponding user equipment to notify information related to time and frequency domains that can be used by the corresponding user equipment, encoding, data size, and HARQ. An interface for transmitting user traffic or control traffic can be used between the base stations. A Core Network (CN) may include the AG and a network node or the like for user registration of the UE. The AG manages mobility of a UE on a TA (Tracking Area) unit basis, wherein one TA unit includes a plurality of cells.

The wireless communication technology has been developed up to the LTE based upon WCDMA. However, the demands and expectations of the users and the manufacturers and providers are growing continuously. Also, since other wireless access technologies are constantly being developed, the wireless communication technology is required to newly evolve in order to ensure competiveness in the future. Accordingly, characteristics, such as reduced cost for each bit, extended service availability, usage of a flexible frequency band, simple structure and open interface, and adequate power consumption of the user equipment are being requested.

The document ("MTC devices/low priority/roaming indications at RRC connection setup", 3GPP DRAFT, R2-106188) outlines a mechanism regarding rejection of connection requests from the MTC devices. In particular, when receiving RRC Connection Request and then RRC Connection Setup Complete, the eNB can check whether the source of request is the MTC device, the MTC device supports low priority applications, or the MTC device is roaming. After checking the indications, the eNB returns RRC Connection Release to the MTC device if needed.

The document ("RRC Connection Release for MTC Devices", 3GPP DRAFT; R2-104562) discloses RRC connection release for MTC device.

The document ("RRC connection control messages", 3GPP DRAFT, R2-075561, XP050142101) outlines need for additional RRC connection control messages and proposes a RRC CONNECTION SETUP COMPLETE message and a RRC CONNECTION RELEASE message.

### Detailed Description of the Invention

### Technical Objects

Based upon the discussion made as described above, a method for a user equipment transmitting/receiving data in a wireless communication system and an apparatus for the same will hereinafter be proposed.

### Technical Solutions

Preferred embodiments of the present disclosure are defined in the appended claims.

### Effects of the Invention

According to the exemplary embodiments of the present invention, by optimizing the usage environment of the portable user equipment and the external device, when pairing the portable user equipment with the external device, a more improved communication environment may be realized, thereby enabling the communication quality of the user equipment to be enhanced.

The effects that may be gained from the embodiment of the present invention will not be limited only to the effects described above. And, effects that have not been mentioned or any other effects of the present application will be apparent to and clearly understood based upon the following description of the present invention, which will be set forth herein.

### Brief Description of the Drawings

Fig. 1 illustrates a general view of an E-UMTS network structure as an example of a communication system.
Fig. 2 illustrates an exemplary structure of an E-UTRAN (Evolved Terrestrial Radio Access Network).
Fig. 3 illustrates a Control Plane structure and a User Plane structure of a Radio Interface Protocol between a user equipment and the E-UTRAN based upon the 3GPP radio access network standard.
Fig. 4 illustrates physical channels that are used in the 3GPP system and a general method for transmitting signals using such physical channels.
Fig. 5 illustrates an exemplary structure of a radio frame that is used in the LTE system.
Fig. 6 illustrates a general transmitting/receiving method using a paging message.
Fig. 7 illustrates a structure of MTC (Machine type communication).
Fig. 8 illustrates an example of an MTC user equipment (or MTC terminal) performing data transmission via uplink according to the present invention.
Fig. 9 illustrates another example of an MTC user equipment (or MTC terminal) performing data transmission via uplink according to an aspect not falling within the claims of the present invention.
Fig. 10 illustrates an example of an MTC user equipment (or MTC terminal) performing data reception via uplink according to an aspect not falling within the claims of the present invention.
Fig. 11 illustrates another example of an MTC user equipment (or MTC terminal) performing data reception via uplink according to an aspect not falling within the claims of the present invention.
Fig. 12 illustrates a block view showing the structure of a communication device according to an exemplary embodiment of the present invention.

### Mode for Carrying Out the Present Invention

Hereinafter, the understanding of the configuration, operation, and other characteristics of the present invention may be facilitated based upon the exemplary embodiments of the present invention, which will be described with reference to the accompanying drawings. The exemplary embodiments of the present invention, which will hereinafter be described in detail, respectively correspond to examples having the technical features of the present invention applied to a 3GPP system.

In the detailed description of the present invention, although the exemplary embodiment of the present invention is described by using an LTE system and an LTE-A system, this is merely exemplary. However, the exemplary embodiment of the present invention may be applied to any type of communication system corresponding to the above-described definition.

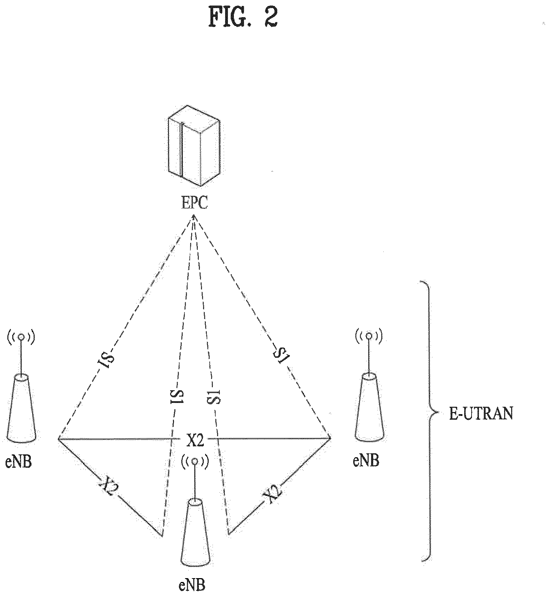

Fig. 2 illustrates an exemplary structure of an E-UTRAN (Evolved Terrestrial Radio Access Network). Most particularly, the E-UTRAN system corresponds to an evolved version of the conventional UTRAN system. The E-UTRAN is configured of cells (eNBs), and each cell is connected to one another through an X2 interface and is also connected to an EPC (Evolved Packet Core) through an S1 interface.

The EPC is configured of an MME (Mobility Management Entity), an S-GW (Serving-Gateway), and a PDN-GW (Packet Data Network-Gateway). The MME carries access information of the UE or information on the capability of the UE. Such information is mainly used for managing the mobility of the UE. The S-GW corresponds to a gateway having the E-UTRAN as its end-point, and the PDN-GW corresponds to a gateway having the PDN as its end-point.

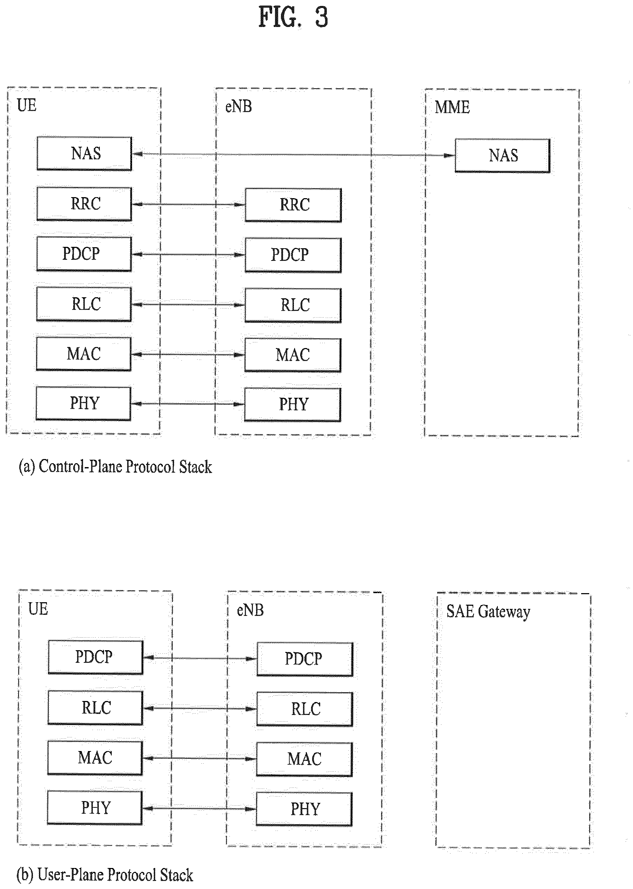

Fig. 3 illustrates a Control Plane structure and a User Plane structure of a Radio Interface Protocol between a user equipment and the E-UTRAN based upon the 3GPP radio access network standard. A control plane refers to a path through which control messages are transmitted. Herein, the control messages are used by the User Equipment (UE) and network in order to manage a call. And, a user plane refers to a path through which data generated from an application layer are transmitted. Such data may include audio data or Internet packet data, and so on.

A first layer, which corresponds to a physical layer, uses a physical channel to provide an Information Transfer Service to a higher layer. The physical layer is connected to a Medium Access Control layer, which corresponds to a higher layer, through a Transport Channel. And, herein, data is transported between the Medium Access Control layer and the physical layer through the Transport Channel. In a data transmission between a physical layer of the transmitting end and a physical layer of the receiving end, data are transported between the physical layers through a physical channel. Herein, the physical layer uses time and frequency as radio resource. More specifically, in a downlink, the physical channel is modulated by using an OFDMA (Orthogonal Frequency Division Multiple Access) scheme, and, in an uplink, the physical channel is modulated by using an SC-FDMA (Single Carrier Frequency Division Multiple Access) scheme.

A second layer includes a Medium Access Control (MAC) layer, a Radio Link Control (RLC) layer, and a Packet Data Convergence Protocol (PDCP) layer. The MAC layer of the second layer performs the role of matching diverse Logical Channels to diverse transmission channels (or transport channels), or the MAC layer performs the role of logical channel multiplexing, through which diverse logical channels are matched to a single transmission channel (or transport channel). The MAC layer is connected to its higher layer, which is the RLC layer, through the logical channel. And, herein, the logical channel may be broadly divided into a Control Channel, which transmits information on a control plane, and a Traffic Channel, which transmits information on a user plane, depending upon the type of the information being transmitted.

Additionally, the RLC layer of the second layer performs Segmentation and Concatenation on the data, which are received from a higher layer, so as to perform the role of adjusting the data size, so that its lower layer can be suitable for transmitting data to a radio section. Also, in order to ensure the diverse QoS (Quality of Service) being required by each Radio Bearer (RB), the RLC layer provides three different types of operation modes, such as a Transparent Mode (TM), an Un-acknowledged Mode (UM), and an Acknowledged Mode (AM). Most particularly, the AM RLC performs a re-transmission function through an Automatic Repeat and Request (ARQ) function, in order to transmit reliable data.

Finally, the PDCP layer of the second layer performs a Header Compression function, which reduces the size of an IP packet header carrying relatively large and unnecessary control information, in order to efficiently perform data transmission from a radio section having a narrow bandwidth, when transmitting an IP packet, such as IPv4 or IPv6. This function increases the transmission efficiency of a radio section by allowing only the required (or necessary) information to be transmitted from the Header portion of the data. Furthermore, in an LTE system, the PDCP layer also performs a Security function, which is configured of Ciphering for preventing data from being intercepted by a third party and Integrity protection for preventing data from being manipulated (or forged) by a third party.

As described above, the function performed by the PDCP layer may include diverse operations, such as header compression, ciphering, integrity protection, PDCP Sequence Number (or Serial Number) maintenance, and so on, and such operations may be selectively (or optionally) performed in accordance with the RB type. The functions of the PDCP layer may be defined as shown below in Table 1. However, in Table 1 shown below, DRB refers to both AM DRB and UM DRB.

### Table 1

**[Table 1]**

| | | |
|---|---|---|
| | • Header compression using ROHC for DRB | |
| | • Security functions: | |
| | | - Integrity protection for SRB |
| | | - Ciphering for SRB and DRB |
| | • Maintenance of PDCP Sequence Numbers for SRB and DRB | |
| | • Handover support functions: | |
| | | - Status Reporting for AM DRB |
| | | - Duplicate elimination of lower layer SDUs for AM DRB |
| | | - In-sequence delivery of upper layer PDUs for AM DRB |
| | • Timer based SCU discard for SRB and DRB | |

A Radio Resource Control (RRC) layer of a third layer is defined only in the control plane. The RRC layer handles the control of logical channels, transmission channels (or transport channels), and physical channels in relation with the Configuration, Reconfiguration, and Release of Radio Bearers (RBs). An RB refers to a service that is being provided by the second layer in order to deliver data to and from the user equipment and the network. In order to do so, the RRC layer of the user equipment and the network may exchange RRC messages to and from one another.

The Radio Bearer (RB) may be broadly divided into an SRB (Signaling Radio Bearer), which is used for transmitting RRC messages from the control plane, and a DRB (Data Radio Bearer), which is used for transmitting user data from the user plane, and, herein, depending upon the operation mode of the RLC using the DRB, the DRB may be divided into a UM DRB using the UM RLC and an AM DRB using the AM RLC.

Hereinafter, an RRC state of the user equipment and the RRC connection method will be described. The RRC state refers to whether or not the RRC of a user equipment and the RRC of an E-UTRAN are connected to one another via logical connection. And, if the logical connection is established, the RRC state is referred to as an RRC connected state (RRC_CONNECTED), and if the logical connection is not established, the RRC state is referred to as an RRC idle state (RRC_IDLE).

Since the E-UTRAN can determine the presence of a user equipment being in the RRC_CONNECTED state in cell units, the E-UTRAN may effectively control the user equipment. Conversely, the E-UTRAN cannot determine the presence of a user equipment being in the RRC_IDLE state in cell units, and instead the user equipment being in the RRC_IDLE state is managed by a CN in TA units, the TA unit corresponding to an area unit larger than the cell unit. More specifically, in order to allow a user equipment being in the RRC_IDLE state to receive an audio service or a data service from a cell, the corresponding user equipment should be shifted to the RRC_CONNECTED state.

Most particularly, when the user has first turned on the power of the user equipment, the user equipment first searches for an adequate cell and remains in the RRC_IDLE state in the corresponding cell. The user equipment remaining in the RRC_IDLE state may perform an RRC connection establishment procedure with the RRC of the E-UTRAN only when the user equipment is required to establish RRC connection, thereby being shifted to the RRC_CONNECTED state. Herein, a case when the user equipment is required to establish RRC connection refers to a case when uplink data transmission is required due to reasons, such as a user's attempt to make (or establish) a call, or when the user equipment is required to transmit a response message respective to a paging message transmitted from the E-UTRAN.

Meanwhile, a NAS (Non-Access Stratum) layer, which is located above the RRC layer performs the roles of Session Management and Mobility Management. In order to perform mobility management in the NAS layer, the following two states, an EMM (EPS Mobility Management) registered state (EMM-REGISTERED) and an EMM unregistered (or non-registered) state (EMM-UNREGISTERED), are defined, and such two states are applied to the user equipment and the MME. The initial user equipment is in the EMM-UNREGISTERED state, and in order to allow this user equipment to access a network, the initial user equipment should perform a process of being registered to the corresponding network through an Initial Attach procedure. Once the initial attach procedure is successfully performed, the user equipment and the MME are shifted to the EMM-REGISTERED state.

Additionally, in the NAS layer, in order to manage a signaling connection between the user equipment and the EPC, the following two different states, an ECM (EPS Connection Management) idle state (ECM_IDLE) and an ECM (EPS Connection Management) connected state (ECM_CONNECTED), are defined, and such two states are applied to the user equipment and the MME. When the ECM_IDLE user equipment establishes an RRC connection with the E-UTRAN, the corresponding user equipment is shifted to the ECM_CONNECTED state. And, when the ECM_IDLE MME establishes an S1 connection with the E-UTRAN, the corresponding MME is shifted to the ECM_CONNECTED state.

When the user equipment is in the ECM_IDLE state, the E-UTRAN does not carry information (context) of the user equipment. Accordingly, the ECM_IDLE user equipment performs a user equipment based mobility-related procedure, such as a cell selection or cell re-selection procedure, without being required to receive a command from the network. Conversely, when the user equipment is in the ECM_CONNECTED state, the mobility management of the user equipment is management by a command from the network. In the ECM_IDLE state, when the position of the user equipment becomes different from the position known by the network, the user equipment notifies the corresponding position to the network by performing a TA update (Tracking Area Update) procedure.

In the LTE system, one cell that configures a base station (eNB) is set to one of bandwidths of 1.25, 2.5, 5, 10, 15, 20Mhz, thereby providing a downlink or uplink transport service to several user equipments. Different cells may be set to provide different bandwidths.

In the network, downlink transmission channels that transmit data to the UE include a BCH (Broadcast Channel), which transmits system information, a PCH (Paging Channel), which transmits paging messages, and a downlink SCH (Shared Channel), which transmits information other than the system information, such as user traffic or control messages. In case of traffic information or control messages of a downlink multicast or broadcast service, the corresponding data may be transmitted through a downlink SCH or may also be transmitted through a separate downlink MCH (Multicast Channel).

Meanwhile, uplink transmission channels that transmit data from the UE to the network include a RACH (Random Access Channel), which transmits initial control messages, and an uplink SCH (Shared Channel), which transmits information other than the system information, such as user traffic or control messages. Logical Channels being in a level higher than the transmission channel and being mapped to the transmission channel include a BCCH (Broadcast Channel), a PCCH (Paging Control Channel), a CCCH (Common Control Channel), an MCCH (Multicast Control Channel), an MTCH (Multicast Traffic Channel), and so on.

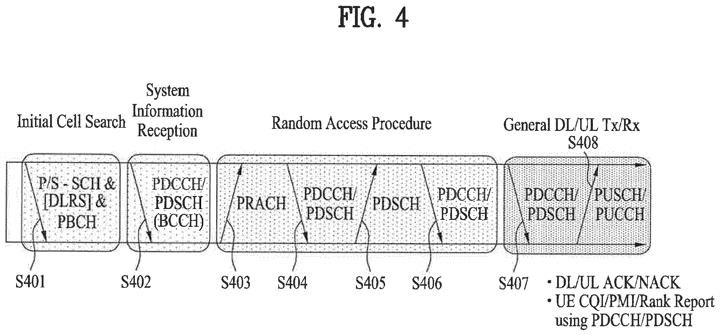

Fig. 4 illustrates physical channels that are used in the 3GPP system and a general method for transmitting signals using such physical channels.

The user equipment performs initial cell search such as synchronization with the base station, when it newly enters a cell or when the power is turned on (S401). In order to do so, the user equipment synchronizes with the base station by receiving a Primary Synchronization Channel (P-SCH) and a Secondary Synchronization Channel (S-SCH) from the base station, and then acquires information such as cell ID, and so on. Thereafter, the user equipment may acquire broadcast information within the cell by receiving a Physical Broadcast Channel from the base station. Meanwhile, in the step of initial cell search, the user equipment may receive a Downlink Reference Signal (DL RS) so as to verify the downlink channel status.

Once the user equipment has completed the initial cell search, the corresponding user equipment may acquire more detailed system information by receiving a Physical Downlink Control Channel (PDCCH) and a Physical Downlink Control Channel (PDSCH) based upon the respective information carried in the PDCCH (S402).

Meanwhile, if the user equipment initially accesses the base station, or if there are no radio resources for signal transmission, the user equipment may perform a Random Access Procedure (RACH) with respect to the base station (S403 to S406). In order to do so, the user equipment may transmit a specific sequence to a preamble through a Physical Random Access Channel (PRACH) (S403), and may receive a response message respective to the preamble through the PDCCH and the PDSCH corresponding to the PDCCH (S404). In case of a contention based RACH, a Contention Resolution Procedure may be additionally performed.

After performing the above-described process steps, the user equipment may perform PDCCH/PDSCH reception (S407) and Physical Uplink Shared Channel (PUSCH)/Physical Uplink Control Channel (PUCCH) transmission (S408), as general uplink/downlink signal transmission procedures. Most particularly, the user equipment receives Downlink Control Information (DCI) through the PDCCH. Herein, the DCI includes control information, such as resource allocation (or assignment) information respective to the corresponding user equipment, and each format of the DCI may differ from one another depending upon the purpose of the corresponding DCI.

Meanwhile, the control information, which is transmitted by the user equipment to the base station or received by the user equipment from the base station via uplink, includes downlink/uplink ACK/NACK signals, a CQI (Channel Quality Indicator), a PMI (Precoding Matrix Index), an RI (Rank Indicator), and so on. In case of the 3GPP LTE system, the user equipment may transmit control information, such as the above-described CQI/PMI/RI through the PUSCH and/or the PUCCH.

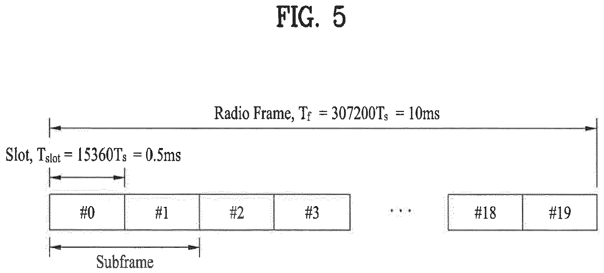

Fig. 5 illustrates an exemplary structure of a radio frame that is used in the LTE system.

Referring to Fig. 5, a radio frame has the length of 10ms (327200 x Ts) and is configured of 10 subframes each having the same size. Each subframe has the length of 1ms and is configured of 2 slots. Each slot has the length of 0.5ms (15360 x Ts). Herein, Ts represents a sampling time and is indicated as Ts=1/(15kHz x 2048)=3.2552 x 10⁻⁸ (approximately 33ns). A slot includes a plurality of OFDM symbols in the time domain and includes a plurality of Resource Blocks (RBs) in the frequency domain. In the LTE system, one resource block includes 12 subcarriers x 7(6) OFDM symbols. ATTI (Transmission Time Interval), which corresponds to a unit time during which data are transmitted, may be decided as one or more subframe units. Herein, the above-described radio frame structure is merely exemplary. And, therefore, the number of subframes included in a radio frame, or the number of slots included in a subframe, or the number of OFDM symbols included in a slot may be diversely varied.

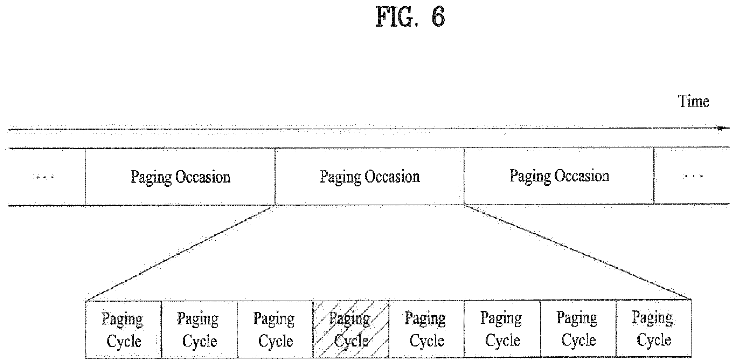

Fig. 6 illustrates a general transmitting/receiving method using a paging message.

Referring to Fig. 6, a paging message includes a Paging Cause and a Paging record, which is configured of a user equipment identity (UE Identity), and so on. When receiving the Paging message, the user equipment may perform Discontinuous Reception (DRX) for the purpose of reducing power consumption.

More specifically, the network configures multiple Paging Occasions (POs) at each time cycle, which is referred to as a Paging DRX Cycle. And, a specific user equipment may only receive a specific paging occasion, so as to acquire a paging message. At a time other than the specific paging occasion, the user equipment does not receive any paging channel and may remain in an idle state in order to reduce power consumption. One paging occasion correspond to one TTI.

The base station and the user equipment use a Paging Indicator (PI) as a specific value for notifying the transmission of a paging message. The base station defines a specific identifier (e.g., Paging - Radio Network Temporary Identity; P-RNTI) for the purpose of the PI, thereby being capable of notifying the transmission of the paging information to the user equipment. For example, the user equipment may wake up at least DRX cycle and may receive a subframe in order to notify whether or not a paging message has appeared. Then, when a P-RNTI exists in an L1/L2 control channel (PDCCH) of the received subframe, the user equipment may determine that a paging message exists in the PDSCH of the corresponding subframe. Additionally, when a UE Identifier (e.g., IMSI) of the user equipment itself exists in the paging message, the user equipment may then respond (e.g., perform RRC connection or receive system information) to the base station, so as to receive service.

Hereinafter, System Information will be described in detail. The system information includes required information that should be known by the user equipment in order to access the base station. Therefore, the user equipment is required to receive all system information prior to accessing the base station. And, additionally, the user equipment is required to be always provided with the latest (or most recent) system information. Moreover, since the system information corresponds to information that should be known by all user equipments included in a single cell, the base station periodically transmits the system information.

The system information may be divided into MIB (Master Information Block), SB (Scheduling Block), and SIB (System Information Block). The MIB allows the user equipment to be aware of a physical structure, *e.g*., bandwidth, of the corresponding cell. The SB notifies transmission information, *e.g*., transmission cycle, of the SIBs. And, the SIB corresponds to a collection of system information being correlated with one another. For example, a specific SIB includes only information on neighboring cells, and another SIB includes information on an uplink radio channel used by the user equipment.

In order to notify the user equipment of any change in the system information, the base station transmits a paging message. In this case, the paging message includes a system information change indicator. Depending upon the paging DRX cycle, the user equipment receives a paging message, and, in case the received paging message includes the system information change indicator, the user equipment receives system information being transmitted through a BCCH.

Hereinafter, cell selection and cell re-selection procedures will be described detail.

When the power of the user equipment is turned on, the user equipment should select a cell of an adequate quality, so as to perform preparatory procedures for receiving a service. A user equipment that is in an RRC idle mode (or state) should always select a cell of an adequate quality and should always be prepared for being provided with service from this particular cell. For example, when the power of a user equipment has just been turned on, the corresponding user equipment should select a cell of an adequate quality in order to be registered to the network. When a user equipment that was in the RRC connected state enters the RRC idle state, this particular user equipment should select a cell in which it is to remain while being in the RRC idle state. As described above, a procedure for selecting a cell that meets with the specific requirements for allowing the user equipment to remain in a service stand-by state (or service waiting state), such as the RRC idle state, is referred to as Cell Selection. Notably, since Cell Selection is performed when the user equipment is in a state when the cell in which the RRC idle state user equipment is to remain has not yet been decided, it is most important to select the corresponding cell as quickly as possible. Therefore, in case a cell provides a radio signal quality exceeding a predetermined standard, although the corresponding cell may not be capable of providing the user equipment with the most excellent radio signal quality, the corresponding cell may be selected during the cell selection procedure of the user equipment.

If the user equipment selects a cell satisfying the cell selection standard, the user equipment receives information required for the operation of the user equipment being in the RRC idle state by the corresponding cell from the system information of the corresponding cell. After receiving all of the information required for the operation of the user equipment being in the RRC idle state, the user equipment sends a request for a service to the network, or the user equipment goes into (or enters) the RRC idle state to be on stand-by for being provided with the requested service.

After selection a particular cell during the cell selection procedure, the intensity or quality of a signal between the user equipment and the base station may change (or vary) depending upon the mobility (or movement) of the user equipment or a change in the wireless environment. Therefore, if the quality of the selected cell is degraded, the user equipment may select another cell that provides better quality. In case the cell is re-selected as described above, generally, a cell that provides signal quality more excellent than the currently selected cell may be selected. This procedure is referred to as Cell Reselection. Generally, in light of the quality of the radio signal, the essential purpose of the cell reselection procedure is to select a cell providing the user equipment with the most excellent quality. In addition to the quality of the radio signal, the network may decide priority levels for each frequency and may notify the decided priority levels to the user equipment. After receiving the notified priority levels, during the cell reselection procedure, the user equipment may consider such priority levels with a higher priority than the radio signal quality standard.

Hereinafter, an MTC (Machine type communication) will be described in detail.

An MTC refers to a type of communication that is established between one machine and another machine without any human interference, and a device that is used for MTC is referred to as an MTC device. The MTC is also referred to as M2M (Machine to Machine). A service that is being provided via MTC is distinguished from a conventional service that is performed via communication established by human interference, and, accordingly, a wide range of services exists as described below. For example, services such as Tracking, Metering, Payment, Medical services, remote controlled services, and so on, are provided via MTC.

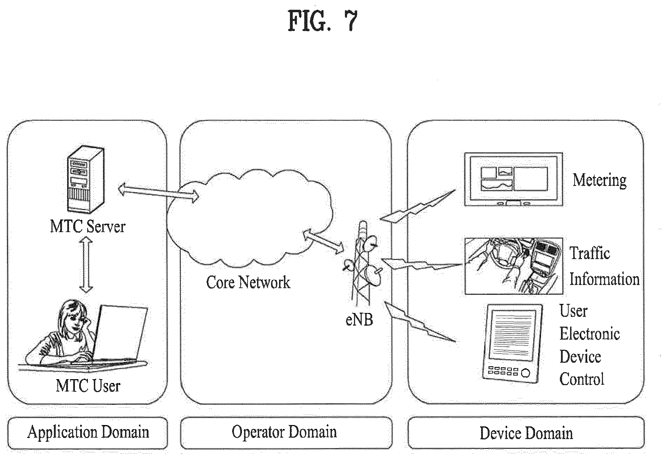

Fig. 7 illustrates a structure of MTC (Machine type communication).

The MTC device communicates with another MTC device or MTC server through a mobile communication network. The MTC server may provide diverse services, such as metering, traffic information (or road information), user electronic device control, and so on, which are provided through MTC devices, as shown in Fig. 7, to an MTC User.

In order to effectively support the MTC service, diverse characteristics of an MTC device, such as low mobility, Time tolerant (or tolerance) or Delay tolerant (or tolerance), Delay tolerance, Small data transmission, and so on, may be taken into consideration. And, for such reasons, the MTC device may also be referred to as Delay tolerant access supported user equipment.

Additionally, it may be assumed that a large number of MTC devices can exist in a single cell. Therefore, when simultaneously providing a communication service to the large number of MTC devices, all of the MTC devices are required to establish RRC connection with the network.

Generally, in order to allow the user equipment being in an RRC idle mode to transmit data to the network, an RRC connection establishment procedure is required to be completed, and a security activation procedure is required to be performed afterwards, and a DRB setup procedure is required to be performed through an RRC connection reconfiguration procedure. Therefore, as performed in an MTC device, in a user equipment that intermittently transmits small amounts of data, there may occur a critical problem of having signaling overhead become larger due to the RRC connection as compared to the data size.

Therefore, in order to reduce the signaling overhead caused by the RRC connection with the network, in the present invention, the user equipment intermittently transmits only small amounts of data, *i.e.*, the MTC device transmits an RRC Connection Request message including a specific indicator to the network, receives an RRC Connection Setup message (or RRC Connection Setting message) from the network, and then transmits an RRC Connection Setup message along with the small amount of data (hereinafter referred to as short data for simplicity) to the network.

Most particularly, in case the MTC user equipment receives the short data via downlink, the user equipment receives a call message (or paging message) including the specific indicator, and as a response (or reply) to the received call message, the user equipment may transmit an RRC Connection Request message including the specific indicator to the network.

Meanwhile, the specific indicator indicates that a short data transmission or a short transmission will be performed (or carried out) through a temporary RRC connection, and the specific indicator is included as an Establishment Cause, which is included in the RRC Connection Request message.

Additionally, the RRC Connection Setup message, which is transmitted to the user equipment from the network, may include a temporary connection indicator, and, if a temporary connection indicator is included in the RRC Connection Setup message or in the system information of a current serving cell, the user equipment may release (or disconnect) the RRC connection on its own immediately after the successful transmission/reception of the short data.

Preferably, the user equipment receives the short data from the network through an RRC Connection Setup message, or the user equipment transmits the short data to the network through an RRC Connection Setup Completion message (or RRC Connection Setting Completion message). Alternatively, the short data may be transmitted through a dedicated control channel of downlink/uplink, which corresponds to a logical channel delivering control signals.

More preferably, the user equipment may include information on the amount (or size) of the short data (Buffer Status Report, BSR) to the RRC Connection Request message or the RRC Connection Setup Completion message, which is transmitted via uplink. The BSR may be included in a MAC CE (control element), so as to be transmitted to the network through a radio channel along with the RRC Connection Request message or the RRC Connection Setup Completion message. Alternatively, the BSR may be transmitted to the network through a dedicated control channel along with the RRC Connection Request message or the RRC Connection Setup Completion message.

Additionally, the network may notify the user equipment of a temporary connection time through the RRC Connection Setup message or system information, and the temporary connection time notifies for how long specific user equipment(s) can be in the RRC connected mode. If the connection time is included in the RRC Connection Setup message, and when the user equipment corresponds to any one of 1) a case when the user equipment has received an RRC Connection Setup message, 2) a case when the user equipment has transmitted an RRC Connection Setup Completion message, 3) a case when the user equipment has received an uplink grant for performing short data uplink transmission, 4) a case when the user equipment has received downlink assignment information for the short data, and 5) a case when the user equipment has transmitted a BSR for notifying the size of the short data that ate to be transmitted via uplink , a timer for the temporary connection time may be initiated.

Additionally, when the user equipment corresponds to any one of a) a case when the timer respective to the temporary connection time is expired, b) a case when the user equipment has received an acknowledgement for all short data transmitted via uplink, c) a case when the user equipment has transmitted an acknowledgement for all short data received via downlink, d) a case when the user equipment has received an RRC message or MAC CE indicating an RRC connection release (or RRC disconnection), e) a case when the user equipment has transmitted a BSR notifying that there are no data to be transmitted, f) a case when the user equipment has transmitted an indicator for indicating the completion of all short data uplink transmission to the network, g) a case when the user equipment has transmitted all short data via uplink, h) a case when the user equipment has received all short data via downlink, and i) a case when the user equipment has transmitted an RRC Connection Setup Completion message indicating an acknowledgement respective to the downlink transmission of short data, the user equipment releases (or disconnects) the RRC Connection.

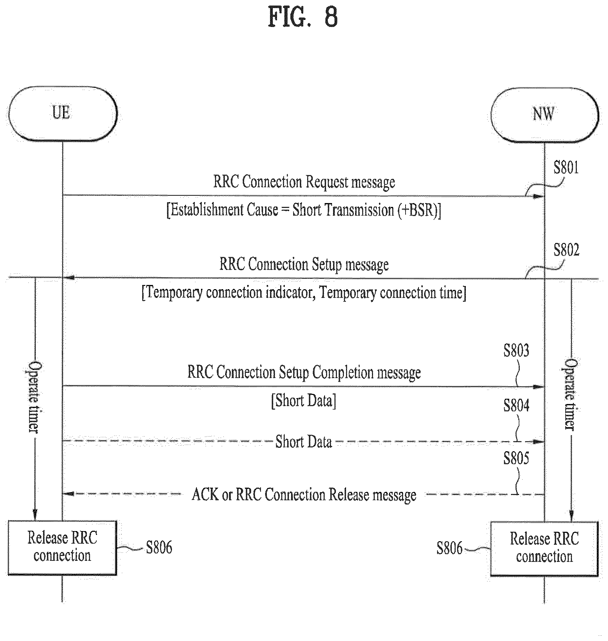

Fig. 8 illustrates an example of the MTC user equipment performing short data transmission via uplink according to the present invention.

Referring to Fig. 8, the MTC user equipment first transmits an RRC Connection Request message, as shown in step 801. At this point, the user equipment sets up the establishment cause, which is included in the RRC Connection Request message, as a Short Transmission or a Short Connection. Additionally, the RRC Connection Request message may indicate the size (or amount) of the data that is to be transmitted via uplink, and, in order to do so, the user equipment may include an indicator indicating the data size is diverse levels, such as "extremely low", "low", "medium", "high", "extreamly high", and so on, in the RRC Connection Request message, or the user equipment may include a BSR (Buffer Status Report) indicating a detailed data size, which is included in a transmission buffer of the user equipment, in the RRC Connection Request message.

Moreover, after receiving the RRC Connection Request message, the network transmits an RRC Connection Setup message to the user equipment, as shown in step 802. At this point, the RRC Connection Setup message may include a temporary connection indicator and a temporary connection time for transmitting/receiving short data. In case information on the data size is included in the RRC Connection Request message, which is received by the network, the network may allocate an uplink grant to the user equipment before transmitting the RRC Connection Setup Completion message.

Subsequently, after receiving the RRC Connection Setup message, the user equipment may shift to the RRC connected mode. In case the temporary connection indicator is included in the RRC Connection Setup message, or in case the temporary connection indicator is included in the system information of the current cell, the user equipment recognizes the currently setup RRC connection as being released (or disconnected) after the completion of the short data transmission/reception. Additionally, in case a temporary connection time is included in the RRC Connection Setup message, or in case a temporary connection time is received from the system information, then user equipment may begin (or initiate) the operation of the timer in any one of the cases 1) when the user equipment receives the RRC Connection Setup message, 2) when the user equipment transmits the RRC Connection Setup Completion message, 3) when the user equipment receives an uplink grant for performing uplink transmission of the short data, and 4) when the user equipment transmits a BSR, which notifies the size of the short data that are to be transmitted via uplink.

Thereafter, in step 803, the user equipment transmits the RRC Connection Setup Completion message to the network along with the short data. At this point, the RRC Connection Setup Completion message, which includes the short data, may be transmitted through a logical channel DCCH, which correspond to SRB1.

Additionally, in an embodiment not falling within the claims, instead of including the short data in the RRC Connection Setup Completion message, the user equipment may also separately transmit the short data via uplink apart from the RRC Connection Setup Completion message. At this point, the short data may be transmitted through the DCCH channel, or the short data may be transmitted through a DTCH channel, which corresponds to the DRB.

Meanwhile, in any one of the following cases, a) in case the time corresponding to the temporary connection time is expired, b) in case an acknowledgement respective to the short data transmission is received, as shown in step 805, or in case an RRC Connection Release message indicating the RRC connection release (or disconnection) or MAC CE is received, c) in case a BSR notifying the absence of any data that are to be transmitted is transmitted, d) in case an indicator indicating the completion of all uplink short data transmission is transmitted to the network, and e) in case all short data are transmitted via uplink, the user equipment and the network release the RRC connection, which is established between one another, as shown in step 806.

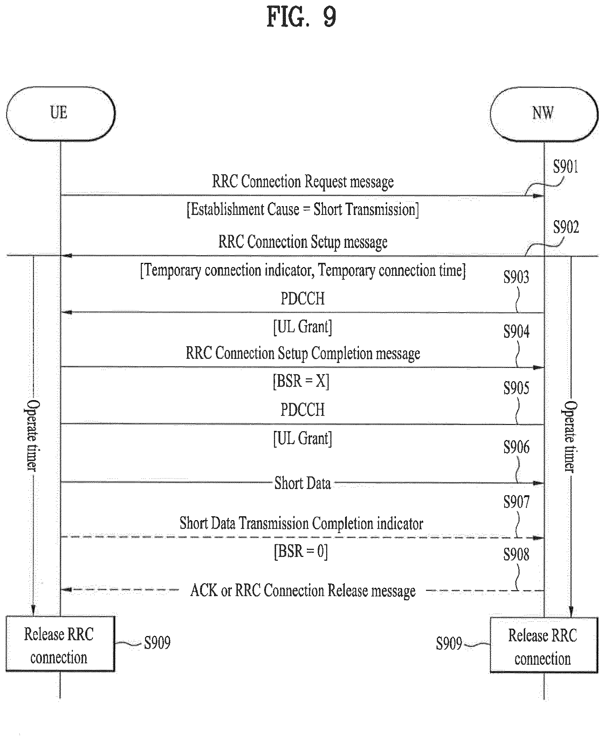

Fig. 9 illustrates another example of the MTC user equipment performing short data transmission via uplink according to an aspect not falling within the claims of the present invention.

Referring to Fig. 9, the MTC user equipment first transmits an RRC Connection Request message, as shown in step 901. At this point, the user equipment sets up the establishment cause, which is included in the RRC Connection Request message, as a Short Transmission or a Short Connection.

After receiving the RRC Connection Request message, the network transmits an RRC Connection Setup message to the user equipment, as shown in step 802. At this point, the RRC Connection Setup message may include a temporary connection indicator and a temporary connection time for transmitting/receiving short data. After receiving the RRC Connection Setup message, the user equipment may shift to the RRC connected mode.

Meanwhile, the network may signal an uplink grant for the uplink transmission of the RRC Connection Setup Completion message to the user equipment through the PDCCH, as shown in step 903. After receiving the RRC Connection Setup message, as shown in step 904, the user equipment transmits the RRC Connection Setup Completion message to the network. At this point, the RRC Connection Setup Completion message may indicate the size of the data that are to be transmitted via uplink. In order to indicate the data size, the user equipment may include an indicator indicating diverse levels of data size in the message, or the user equipment may include a BSR (Buffer Status Report) indicating a detailed data size (X bytes) included in the transmission buffer of the user equipment. Most particularly, in case of the BSR, instead of including the BSR in the RRC Connection Setup Completion message, the user equipment may transmit the BSR through the MAC CE, which is being transmitted along with the RRC Connection Setup Completion message.

Subsequently, after receiving the RRC Connection Setup Completion message, in step 905, the network may transmit an uplink grant for performing uplink transmission of short data to the user equipment. As shown in step 906, the user equipment transmits the short data via uplink in accordance with the uplink grant once or more than once.

Meanwhile, in any one of the following cases, a) in case the time corresponding to the temporary connection time is expired, b) in case an acknowledgement respective to the short data transmission is received, as shown in step 908, or in case an RRC Connection Release message indicating the RRC connection release (or disconnection) or MAC CE is received, c) as shown in step 907, in case a BSR notifying the absence of any data that are to be transmitted is transmitted, or in case an indicator indicating the completion of all uplink short data transmission is transmitted to the network, and d) in case all short data are transmitted via uplink, the user equipment and the network release the RRC connection, which is established between one another, as shown in step 806.

In case of the uplink transmission of Fig. 8 and Fig. 9, after receiving the short data, the base station delivers the received short data to a network node, which is indicated by the user equipment, through the RRC Connection Request message or the RRC Connection Setup Completion message. The network node that is indicated by the user equipment corresponds to a specific MME or a specific Serving Gateway belonging to the core network. The user equipment may indicate the corresponding network node through an identity or IP address of the MME or serving gateway.

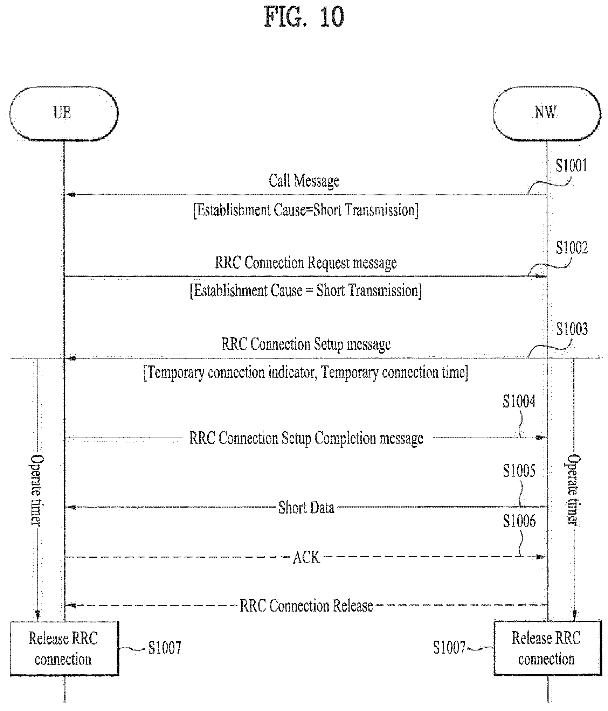

Fig. 10 illustrates an example of the MTC user equipment performing short data reception via uplink according to an aspect not falling within the claims of the present invention.

Referring to Fig. 10, as shown in step 1001, the user equipment receives a call message from the network. In case a user equipment identifier corresponding to the user equipment and a call cause indicating a Short Transmission or a Short Connection are included in the call message, the user equipment may set up the Short Transmission or the Short Connection as the connection cause (or establishment cause) being included in the RRC Connection Request message, and, then, as shown in step 1002, the user equipment transmits the RRC Connection Request message to the network.

After receiving the RRC Connection Request message, the network transmits an RRC Connection Setup message to the user equipment, as shown in step 1003. At this point, the RRC Connection Setup message may include a temporary connection indicator and a temporary connection time for transmitting/receiving short data. After receiving the RRC Connection Setup message, the user equipment may shift to the RRC connected mode.

In case the temporary connection indicator is included in the RRC Connection Setup message, or in case the temporary connection indicator is included in the system information of the current cell, the user equipment recognizes the currently setup RRC connection as being released (or disconnected) after the completion of the short data transmission/reception. In case a temporary connection time is included in the RRC Connection Setup message, or in case a temporary connection time is received from the system information, then user equipment may begin (or initiate) the operation of the timer in any one of the cases 1) when the user equipment receives the RRC Connection Setup message, 2) when the user equipment transmits the RRC Connection Setup Completion message, 3) when the user equipment receives a downlink grant information for receiving the short data, and 4) when the user equipment receives all short data via downlinks a BSR, which notifies the size of the short data that are to be transmitted via uplink.

After receiving the RRC Connection Setup message, the user equipment transmits the RRC Connection Setup Completion message to the network, as shown in step 1004. In case the user equipment has not yet received the short data, the user equipment may notify that the short data have not been completely (or fully) received through the RRC Connection

### Setup Completion message.

Meanwhile, after receiving the RRC Connection Setup Completion message along with the RRC Connection Setup message, the user equipment may receive downlink allocation information for the downlink reception of the short data through the PDCCH. In accordance with the downlink allocation information, the user equipment receives the short data through the SRB1 or DRB, as shown in step 1005.

When all of the short data are successfully received, the user equipment transmits an ACK to the network, as shown in step 1006. Alternatively, the user equipment may indicate the successful downlink reception of the short data through the RRC Connection Setup Completion message.

Meanwhile, in any one of the following cases, a) when the time corresponding to the temporary connection time is expired, b) in case an acknowledgement respective to the transmission of all short data is transmitted, c) in case an RRC Connection Release message indicating the RRC connection release (or disconnection) or MAC CE is received, d) in case an RRC Connection Setup Completion message indicating an acknowledgement respective to the transmission of all short data is transmitted, and e) in case all short data are received via downlink, the RRC connection may be released (or disconnected).

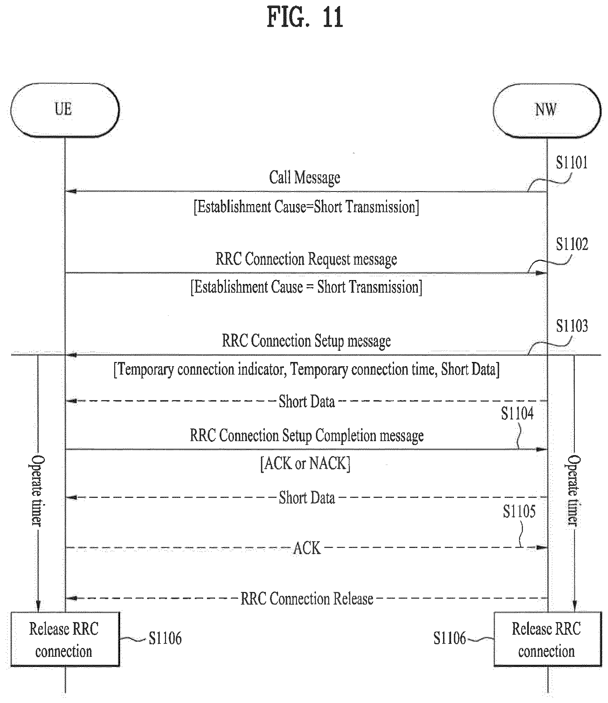

Fig. 11 illustrates another example of the MTC user equipment performing short data reception via uplink according to an aspect not falling within the claims of the present invention. Step 1101 and step 1102 of Fig. 11 are identical to step 1001 and step 1002 of Fig. 10, and, therefore, detailed description of the same will be omitted for simplicity.

Referring to Fig. 11, after receiving the RRC Connection Request message, the network transmits an RRC Connection Setup message to the network, in step 1103. At this point, the RRC Connection Setup message may include a temporary connection indicator and a temporary connection time for transmitting/receiving short data, and short data may be included in the RRC Connection Setup message.

As a response (or reply) to the RRC Connection Setup message, the user equipment transmits an RRC Connection Setup Completion message to the network, as shown in step 1104. In case the short data are received prior to the transmission of the RRC Connection Setup Completion message, the user equipment may notify a reception response (or reply) of the downlink short data, *i.e.*, ACK (acknowledgement) or NACK (negative acknowledgement) through the RRC Connection Setup Completion message. Additionally, the user equipment may separately transmit an ACK/NACK to the network, as shown in step 1105. In case the response transmitted by the user equipment corresponds to a NACK, the network may re-transmit the short data.

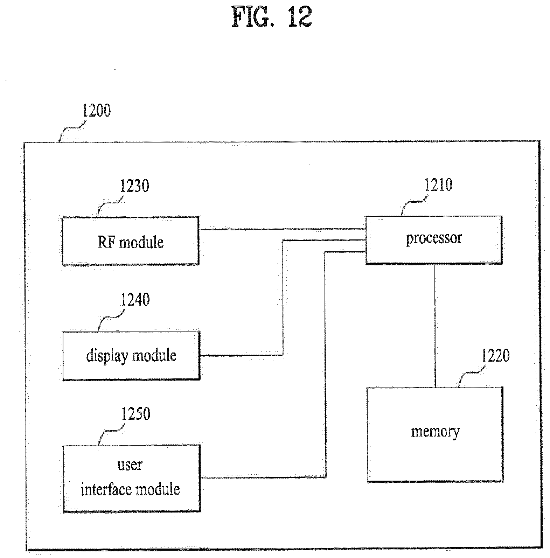

Fig. 12 illustrates a block view showing the structures of a communication device according to an exemplary embodiment of the present invention.

Referring to Fig. 12, a communication device (1200) includes a processor (1210), a memory (1220), an RF module (1230), a display module (1240), and a user interface module (1250).

The communication device (1200) is an exemplary illustration provided to simplify the description of the present invention. Also, the communication device (1200) may further include necessary modules. Also, in the communication device (1200) some of the modules may be divided into more segmented modules. Referring to Fig. 12, an example of the processor (1210) is configured to perform operations according to the embodiment of the present invention. More specifically, reference may be made to Fig. 1 to Fig. 10 for the detailed operations of the processor (1210).

The memory (1220) is connected to the processor (1210) and stores operating systems, applications, program codes, data, and so on. The RF module (1230) is connected to the processor (1210) and performs a function of converting baseband signals to radio (or wireless) signals or converting radio signals to baseband signals. In order to do so, the RF module (1230) performs analog conversion, amplification, filtering, and frequency uplink conversion or inverse processes of the same. The display module (1240) is connected to the processor (1210) and displays diverse information. The display module (1240) will not be limited only to the example given herein. In other words, generally known elements, such as LCD (Liquid Crystal Display), LED (Light Emitting Diode), OLED (Organic Light Emitting Diode) may also be used as the display module (1240). The user interface module (1250) is connected to the processor (1210), and the user interface module (1250) may be configured of a combination of generally known user interfaces, such as keypads, touchscreens, and so on.

The above-described embodiments of the present invention correspond to predetermined combinations of elements and features and characteristics of the present invention.

In the description of the present invention, the embodiments of the present invention have been described by mainly focusing on the data transmission and reception relation between the relay node and the base station. Occasionally, in the description of the present invention, particular operations of the present invention that are described as being performed by the base station may also be performed by an upper node of the base station. More specifically, in a network consisting of multiple network nodes including the base station, it is apparent that diverse operations that are performed in order to communicate with the terminal may be performed by the base station or b network nodes other than the base station. Herein, the term Base Station (BS) may be replaced by other terms, such as fixed station, Node B, eNode B (eNB), Access Point (AP), and so on.

The above-described embodiments of the present invention may be implemented by using a variety of methods. For example, the embodiments of the present invention may be implemented in the form of hardware, firmware, or software, or in a combination of hardware, firmware, and/or software. In case of implementing the embodiments of the present invention in the form of hardware, the method according to the embodiments of the present invention may be implemented by using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro controllers, micro processors, and so on.

In case of implementing the embodiments of the present invention in the form of firmware or software, the method according to the embodiments of the present invention may be implemented in the form of a module, procedure, or function performing the above-described functions or operations. A software code may be stored in a memory unit and driven by a processor. Herein, the memory unit may be located inside or outside of the processor, and the memory unit may transmit and receive data to and from the processor by using a wide range of methods that have already been disclosed.

The present invention may be realized in another concrete configuration (or formation) without deviating from the scope of the essential characteristics of the present invention. Therefore, in all aspect, the detailed description of present invention is intended to be understood and interpreted as an exemplary embodiment of the present invention without limitation. The scope of the present invention shall be decided based upon a reasonable interpretation of the appended claims of the present invention and shall come within the scope of the appended claims.

### Industrial Applicability

As described above, although the method for a user equipment transmitting/receiving data in a wireless communication system and the apparatus for the same are described based upon an example being applied to the 3GPP LTE system, the present invention may also be applied to other variety of wireless communication systems apart from the 3GPP LTE system.

## Claims

1. A method for transceiving a signal with a network at a user equipment in a wireless communication system, the method comprising:
transmitting (S801), to the network, a connection request message including information on an establishment cause and information on an amount of an uplink data, wherein the information on the establishment cause indicates a short data transmission, a short transmission or a short connection;
receiving (S802), from the network, a connection setup message from the network based on the connection request message;
transmitting (S803), to the network, a connection setup completion message for completion of a connection establishment based on the connection setup message, wherein the connection setup completion message includes the uplink data.

2. The method of claim 1, wherein the uplink data is carried on a signaling radio bearer1 on a dedicated control channel.

3. The method of claim 1, wherein the connection setup message includes information on a connection time related to a timer; and
wherein the connection establishment with the network is released based on the timer expiring.

4. The method of claim 1, wherein the connection establishment with the network is released based on the amount of the uplink data being zero.

5. The method of claim 1, wherein the connection setup message includes downlink data being transmitted from the network.

6. The method of claim 5, further comprising:
receiving (S1001), from the network, a paging message including the information on the establishment cause.

7. A user equipment for transceiving a signal with a network in a wireless communication system, the user equipment comprising:
a radio frequency, RF, module (1230); and
a processor (1210);
wherein the processor is configured to:
control the RF module to transmit, to the network, a connection request message including information on an establishment cause and information on an amount of an uplink data, wherein the information on the establishment cause indicates a short data transmission, a short transmission or a short connection;
control the RF module to receive, from the network, a connection setup message from the network based on the connection request message;
control the RF module to transmit, to the network, a connection setup completion message for completion of a connection establishment based on the connection setup message, wherein the connection setup completion message includes the uplink data.

8. The user equipment of claim 7, wherein the uplink data is carried on a signaling radio bearer1 on a dedicated control channel.

9. The user equipment of claim 7, wherein the connection setup message includes information on a connection time related to a timer; and
wherein the processor is configured to release the connection establishment with the network based on the timer expiring.

10. The user equipment of claim 7, wherein the processor is configured to release the connection establishment with the network based on the amount of the uplink data being zero.

11. The user equipment of claim 7, wherein the connection setup message includes downlink data being transmitted from the network.

12. The user equipment of claim 10, the processor is further configured to:
control the RF module to receive, from the network, a paging message including the information on the establishment cause.

## Patentansprüche

1. Verfahren zum Sende-Empfangen eines Signals mit einem Netz an einem Benutzergerät in einem drahtlosen Kommunikationssystem, wobei das Verfahren umfasst:
Übertragen (S801) einer Verbindungsanforderungsnachricht an das Netz, die Informationen über eine Aufbauursache und Informationen über eine Menge von Uplinkdaten enthält, wobei die Informationen über die Aufbauursache eine kurze Datenübertragung, eine kurze Übertragung oder eine kurze Verbindung anzeigen;
Empfangen (S802) einer Verbindungsaufbaunachricht von dem Netz auf der Grundlage der Verbindungsanforderungsnachricht;
Übertragen (S803) einer Verbindungsaufbauabschlussnachricht an das Netz zum Abschluss eines Verbindungsaufbaus auf der Grundlage der Verbindungsaufbaunachricht, wobei die Verbindungsaufbauabschlussnachricht die Uplinkdaten enthält.

2. Verfahren nach Anspruch 1, wobei die Uplinkdaten auf einem Signalisierungsfunkträger1 auf einem dedizierten Steuerkanal übertragen werden.

3. Verfahren nach Anspruch 1, wobei die Verbindungsaufbaunachricht Informationen über eine Verbindungszeit in Bezug auf einen Zeitgeber enthält; und
wobei der Verbindungsaufbau mit dem Netz aufgrund des Ablaufs des Zeitgebers freigegeben wird.

4. Verfahren nach Anspruch 1, wobei der Verbindungsaufbau mit dem Netz freigegeben wird, basierend darauf, dass die Menge der Uplinkdaten Null ist.

5. Verfahren nach Anspruch 1, wobei die Verbindungsaufbaunachricht Downlinkdaten enthält, die von dem Netz übertragen werden.

6. Verfahren nach Anspruch 5, ferner umfassend:
Empfangen (S1001) einer Pagingnachricht von dem Netz, die die Informationen über die Aufbauursache enthält.

7. Benutzergerät zum Sende-Empfangen eines Signals mit einem Netz in einem drahtlosen Kommunikationssystem, wobei das Benutzergerät umfasst:
ein Hochfrequenz, HF, -Modul (1230) und
einen Prozessor (1210);
wobei der Prozessor konfiguriert ist, um:
das HF-Modul zu steuern, an das Netz eine Verbindungsanforderungsnachricht zu senden, die Informationen über eine Aufbauursache und Informationen über eine Menge von Uplinkdaten enthält, wobei die Informationen über die Aufbauursache eine kurze Datenübertragung, eine kurze Übertragung oder eine kurze Verbindung anzeigen;
das HF-Modul zu steuern, auf der Grundlage der Verbindungsanforderungsnachricht eine Verbindungsaufbaumeldung von dem Netz zu empfangen;
das HF-Moduls zu steuern, an das Netz eine Verbindungsaufbauabschlussnachricht zum Abschluss eines Verbindungsaufbaus basierend auf der Verbindungsaufbaunachricht zu übertragen, wobei die Verbindungsaufbauabschlussnachricht die Uplinkdaten enthält.

8. Benutzergerät nach Anspruch 7, wobei die Uplinkdaten auf einem Signalisierungsfunkträger1 auf einem dedizierten Steuerkanal übertragen werden.

9. Benutzergerät nach Anspruch 7, wobei die Verbindungsaufbaunachricht Informationen über eine Verbindungszeit in Bezug auf einen Zeitgeber enthält; und
wobei der Prozessor konfiguriert ist, den Verbindungsaufbau mit dem Netz auf der Grundlage des Ablaufs des Zeitgebers freizugeben.

10. Benutzergerät nach Anspruch 7, wobei der Prozessor konfiguriert ist, den Verbindungsaufbau mit dem Netz freizugeben, basierend darauf, dass die Menge der Uplinkdaten Null ist.

11. Benutzergerät nach Anspruch 7, wobei die Verbindungsaufbaunachricht Downlinkdaten enthält, die von dem Netz übertragen werden.

12. Benutzergerät nach Anspruch 10, wobei der Prozessor ferner konfiguriert ist, um:
das HF-Modul zu steuern, von dem Netz eine Pagingnachricht zu empfangen, die die Informationen über die Aufbauursache enthält.

## Revendications

1. Procédé de transmission/réception d'un signal avec un réseau au niveau d'un équipement utilisateur dans un système de communication sans fil, le procédé comprenant:
la transmission (S801), au réseau, un message de demande de connexion comprenant des informations sur une cause d'établissement et des informations sur une quantité de données montantes, dans lequel les informations sur la cause d'établissement indiquent une transmission courte de données, une transmission courte ou une connexion courte;
la réception (S802), à partir du réseau, d'un message de configuration de connexion provenant du réseau sur la base du message de demande de connexion;
la transmission (S803), au réseau, d'un message d'achèvement de configuration de connexion pour l'achèvement d'un établissement de connexion sur la base du message de configuration de connexion, dans lequel le message d'achèvement de configuration de connexion comprend les données montantes.

2. Procédé selon la revendication 1, dans lequel les données montantes sont portées sur un support1 radio de signalisation sur un canal de commande dédié.

3. Procédé selon la revendication 1, dans lequel le message de configuration de connexion comprend des informations sur un temps de connexion associé à un temporisateur; et
dans lequel l'établissement de connexion au réseau est libéré sur la base de l'expiration du temporisateur.

4. Procédé selon la revendication 1, dans lequel l'établissement de connexion au réseau est libéré sur la base de la quantité des données montantes qui est zéro.

5. Procédé selon la revendication 1, dans lequel le message de configuration de connexion comprend des données montantes transmises par le réseau.

6. Procédé selon la revendication 5, comprenant en outre:
la réception (S1001), provenant du réseau, d'un message de recherche comprenant les informations sur la cause d'établissement.

7. Équipement utilisateur pour transmettre et recevoir un signal avec un réseau dans un système de communication sans fil, l'équipement utilisateur comprenant:
un module de fréquence radio, RF, (1230); et
un processeur (1210);
dans lequel le processeur est configuré pour:
amener le module RF à transmettre, au réseau, un message de demande de connexion comprenant des informations sur une cause d'établissement et des informations sur une quantité de données montantes, dans lequel les informations sur la cause d'établissement indiquent une transmission courte de données, une transmission courte ou une connexion courte;
amener le module RF à recevoir, à partir du réseau, un message de configuration de connexion provenant du réseau sur la base du message de demande de connexion;
amener le module RF à transmettre, au réseau, un message d'achèvement de configuration de connexion pour l'achèvement d'un établissement de connexion sur la base du message d'établissement de connexion, dans lequel le message d'achèvement de configuration de connexion comprend les données montantes.

8. Équipement utilisateur selon la revendication 7, dans lequel les données montantes sont portées sur un support1 radio de signalisation sur un canal de commande dédié.

9. Équipement utilisateur selon la revendication 7, dans lequel le message de configuration de connexion comprend des informations sur un temps de connexion associé à un temporisateur; et
dans lequel le processeur est configuré pour libérer l'établissement de connexion au réseau sur la base de l'expiration de temporisateur.

10. Équipement utilisateur selon la revendication 7, dans lequel le processeur est configuré pour libérer l'établissement de connexion au réseau sur la base de la quantité des données montantes qui est zéro.

11. Équipement utilisateur selon la revendication 7, dans lequel le message de configuration de connexion comprend des données montantes transmises par le réseau.

12. Équipement utilisateur selon la revendication 10, dans lequel le processeur est en outre configuré pour:
amener le module RF à recevoir, provenant du réseau, un message de recherche comprenant les informations sur la cause d'établissement.
